(19) Europäisches Patentamt
European Patent Office
Office européen des brevets

(11) Publication number: 0 000 587 B1

(12) EUROPEAN PATENT SPECIFICATION

(45) Date of publication of patent specification: 09.12.81

(21) Application number: 78100540.0

(22) Date of filing: 28.07.78

(51) Int. Cl.³: C 08 L 63/02, C 08 G 59/54, C 08 G 59/14, C 09 D 3/58, C 09 K 3/10, E 01 C 11/02, E 01 C 7/00

# (54) Epoxy resin compositions and their uses.

(30) Priority: 29.07.77 US 820168

(43) Date of publication of application: 07.02.79 Bulletin 79/3

(45) Publication of the grant of the European patent: 09.12.81 Bulletin 81/49

(84) Designated Contracting States: BE CH DE FR GB LU NL SE

(56) References cited:
FR - A - 1 275 869
GB - A - 959 030
US - A - 3 007 888
US - A - 3 161 114
US - A - 3 649 583

(73) Proprietor: Elliott, Margaret L.
420 South 48th Street
Phoenix Arizona 85034 (US)

(73) Proprietor: Wright, Mary J.
7865 East Keim Drive
Scottsdale Arizona 85253 (US)

(72) Inventor: Elliott, Margaret L.
420 South 48th Street
Phoenix Arizona 85034 (US)
Inventor: Wright, Mary J.
7865 East Keim Drive
Scottsdale Arizona 85253 (US)

(74) Representative: Liedl, Gerhard et al,
Steinsdorfstrasse 21-22
D-8000 München 22 (DE)

EP 0 000 587 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Epoxy Resin Compositions and their Uses

This invention relates to amine-hardened epoxy resin compositions based on epichlorohydrin/bisphenol A and their uses.

The field of the application of the invention is that of durable surface materials for concrete or asphalt roads, pavements, floors and other structures subjected to heavy wear during use.

Ordinary concrete, asphalt, wood or other working surfaces of a wide variety of building structures for industrial, civil and military purposes are frequently subject to severe stresses during day to day use, in addition to being exposed to the action of weather. Surfaces of loading docks and roads in shipyards, railway-yards and factories are constantly being chipped and cracked under the impact of heavy objects such as grappling hooks, heavy clevises, chains, metal containers and the lugs of steel-wheeled machinery. Highway surfaces under the influence of weather and heavy wear, for example that caused by track vehicles, become cracked and pitted, sections are broken away and joints open up, causing increased vulnerability to further damage. Particular examples of working surfaces subject to hard use and severe impact are the area of the deck surface of an aircraft carrier immediately below the aircraft arrester cables and grappling hooks as well as the aircraft landing strips of airports. The surfaces are normally covered with specially formulated reinforced concrete, but they must nevertheless be replaced very frequently at great cost and loss of operating time.

Of the numerous alternative surfacing materials which have been considered and tested for these and similar applications, a variety of epoxy-based materials have offered considerable promise. Epoxy resins adhere well to many surfaces, cure easily, exhibit low shrinkage, are chemically inert, heat and moisture resistant and hard, and have a marked flexibility and impact resistance.

Resins of this type contain the epoxy group, in which an atom of oxygen is linked to both of two adjacent carbon atoms of a carbon chain in the same way as it is in the ethylene oxide molecule:

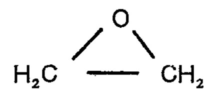

Olefinic material may be converted to simple epoxy (oxirane) compounds by a variety of methods, such as direct oxidation in the presence of silver catalysts, dehydrochlorination of chlorohydrins and, commonly, reaction with peracids. Depending on the peracid used and the conditions, the reaction may proceed further, with the reactive epoxy group forming hydroxyacyloxy compounds or glycols, as shown by the following equation:

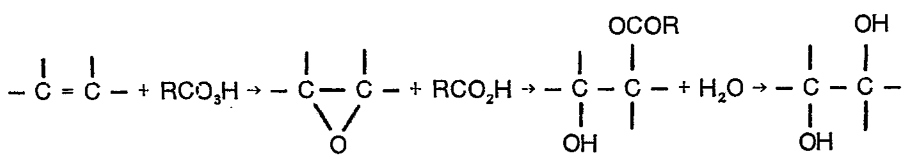

Epoxy resins are formed by condensation reactions of epoxy compounds, for example, of epichlorohydrin with bisphenol A to form low molecular weight chains which have various lengths and still contain active epoxy groups. By interaction with amino and phenolic resins or reaction of curing agents such as polyamines, polyamides or polysulphides, cross-linking and extension of the chains occurs. During hardening to the solid state no volatile products are formed and the reaction occurs with only minimal shrinkage of the resin.

Numerous curable epoxy resins having various physical properties, e.g. viscosities, are commercially available for various applications, together with recommended flexibilizers, plasticizers, diluents, curing agents and hardeners. Various kinds of fillers, colouring materials and other additives may also be employed. However, for applications of the kind under consideration, the available compositions fall short of the requirements. Although the shrinkage of the known compositions during curing is low, it is still excessive when these are used to cover large areas of surface, when cracking is apt to occur. The presently available epoxy materials also tend to loose their initial flexibility in the course of aging, thus exhibiting a phenomenon similar to that of the loss of strength of concrete with passage of time. Furthermore, it is difficult to obtain satisfactory bonding of available compositions to substances such as asphalt.

Thus, further improvements of epoxy resin compositions are necessary, before these materials can withstand the difficult service conditions described above. It is desirable to bring about these improvements without the need for developing differently synthesized polyers for use as starting materials.

Thus it is the object of the invention to provide new epoxy resin compositions of high impact resistance and broad applicability, which undergo less shrinkage during curing and useful life than known compositions, exhibit no deterioration of their initial flexibility and

resilience, provide satisfactory bonding to asphalt and concrete, and which can be asphalt and concrete, and which can be prepared from easily available starting materials.

This object is achieved in accordance with the present invention by providing an amidoamine adduct hardened epoxy resin composition based on epichlorohydrin/bisphenol A, the composition being produced by the process of

(a) mixing together by weight approx. 10% of a glycidyl ester of a saturated carbon-chain substituted tertiary carboxylic acid, having an epoxide equivalent weight of 240 to 250, approx. 79% of a first resin which is an epichlorohydryn/bisphenol A liquid resin having an epoxide equivalent weight in the range 182 to 194, approx. 6% of a plasticizer which is a mixture of the monoglycidyl ether derivatives of the $C_{15}$-alkyl phenols obtained from cashew nut liquid, having an epoxide equivalent weight of about 490, and approx. 5% of a second resin which is an epichlorohydrin/bisphenol A liquid or solid resin having an epoxide equivalent weight of 390 to 500 to form a base resin.

(b) mixing together by weight approx. 80% of a co-reactant which is an amidoamine resin having an amine value of about 450 and a viscosity of 0.5 to 1.0 Pas/25°C, approx. 5% of a tri-(dimethylaminomethyl) phenol, and approx. 15% of pine oil to form a base hardener, and

(c) mixing together said base resin and said base hardener and allowing the mixture to cure.

The above-specified starting materials are known to those skilled in the art and are commercially available.

An ester preferably used in forming the base resin is available under the name CARDURA (registered trade mark) E (Shell Chemical Company, One Shell Plaza, Box 2463, Houston, Texas 77001, USA). This product may be regarded in general as a fatty acid monoglyceride anhydride of the formula

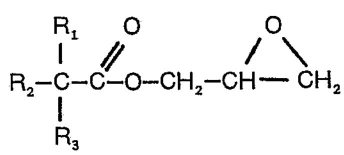

having a boiling point of 275°C. The $\alpha$-carbon atom is sterically hindered by 3 saturated carbon chains.

A first resin used in forming the base resin has an epoxide equivalent weight in the range 182 to 194, preferably 184 to 194 and, most preferably, 187 to 191. A suitable resin is available under the name GENEPOXY (registered trade mark) 190 (General Mills Chemicals Inc., 4620 West 77th Street, Minneapolis, Minn. 55435, USA) and has a viscosity of 11.0 to 14.0 Pas/25°C and a specific gravity of 1.18. Another resin is available under the name EPON (registered trade mark) 828 (Shell Chemical Company, USA) or under the name EPIKOTE (registered trade mark) 828 (Deutsche Shell Chemie GmbH, Nibelungenplatz 3, 6000 Frankfurt/Main, Germany) and has a viscosity of 10.0 to 15.0 Pas/25°C, an average molecular weight of 370 and a specific gravity of 1.17 GENEPOXY (registered trade mark) 185 is also usable. This has a viscosity of 7.0 to 10.0 Pas/25°C and a specific gravity of 1.16.

A suitable plasticizer, usable in forming the base resin, is available under the name CARDOLITE (registered trade mark) Epoxy Resin Flexibilizer and Reactive Diluent NC—513 (3M Company 3M Center, St. Paul, Minnesota 55101, USA).

A suitable second resin, preferably used in forming the base resin, is available under the name EPON (registered trade mark) 871 (Shell Chemical Company, USA) or under the name EPIKOTE (registered trade mark) 871 (Deutsche Shell Chemie GmbH, Germany) and has a viscosity of 0.4 to 0.9 Pas/25°C and a specific gravity of 0.988. This material has also been available as a solid resin.

A suitable co-reactant, preferably used in forming the base hardener, is available under the name GENAMID (registered trade mark) 250 and has a viscosity of 0.5 of 1.0 Pas/25°C.

A suitable phenol, preferably used in forming the base hardener, is 2, 4, 6-tri(dimethylaminomethyl) phenol. This product is available, for example, under the name DMP—30 (registered trade mark) (Rohm and Haas Company, Indepence Mall West, Philadelphia, Pennsylvania 19105, USA) or under the name DION (registered trade mark) Hardener EH—30 (Diamond Shamrock Chemical Company, 300 Union Commerce Building, Cleveland, Ohio 44115, USA).

The pine oil component of the base hardener is added primarily to modify the odour of the resin composition, but it also acts as an additional plasticizer.

In a preferred embodiment of the invention the starting materials are selected from the above specified commercial products.

The base resin and the base hardener are mixed together preferably in a proportion of equal parts by weight (50% : 50%), although the mixing ratio may vary by 50% or even more.

It has been found that known epoxy compositions exhibit a deterioration of their desirable characteristics in the course of aging because certain catalysts, such as polysulphides, which are normally employed by promoting the initial reactions, continue to be active within the composition throughout their useful life. Thus an initially pliable or flexible material becomes brittle and hard, shrinkage occurs and toxic gases are emitted. Reactions which are still incomplete at the time of use of the composition may also lead to subsequent changes of properties. The expoxy resin compositions of the present invention are therefore formed in the absence of damaging catalysts. The constituents employed are 100% reactive.

The particular constituents in the formulation described above react readily and completely, a 1:1 mixture of the base resin and the base hardener producing a flexible, rubberlike basic epoxy composition. This composition is unique as an epoxy material as far as its stability and low shrinkage are concerned. It maintains its initial plasticity and flexibility throughout its long and useful life and its shrinkage upon curing is less than 0.1% of the original liquid volume. These superior characteristics are ascribed, at least partly, to the absence of harmful catalysts. The particular selection and formulation of the constituents, which is not suggested by prior art, is also considered to contribute to this result. The complete reaction of all constituents and the omission of catalysts such as polysulphides results in the formation of a composition which is non-toxic, non-irritating and non-combustible and which exhudes no volatile gases.

The base resin and the base hardener of the present invention have an indefinite shelf life prior to mixing and are water-soluble. The mixture has a pot life of about one hour and can be applied over damp surfaces and trace amounts of grease and oil. It may include organic or mineral colouring materials. The mixture will set below freezing point. At ordinary temperatures it sets within a few hours, although higher temperatures accelerate the process. The cured composition adheres to asphalt as well as to concrete and will not become tacky under the action of heat.

The basic epoxy composition described above may be used directly as a flexible molding material and its surface may be shaped to form patterns of very fine and intricate detail.

The base resin and the base hardener, as formed in the present invention, may be supplemented with fillers and other additives in order to yield desirable characteristics of the final composition for other applications. Preferred embodiments are described hereunder.

An epoxy resin composition of the present invention is produced by

(a) mixing the base resin with silica flour and a colouring agent in a proportion of approx. 27% : 72% : 1% by weight, respectively, to form a base resin mixture,

(b) mixing the base hardener with silica flour and a colloid in a proportion of approx. 20% : 78% : 2% by weight, respectively, to form a base hardener mixture, and

(c) mixing said base resin mixture with said base hardener mixture in a proportion of approx. 50% : 50% by weight.

The silica flour, as used above, consists of equal parts by weight of 140, 200, and 325 mesh (according to ASTM E 11—58 T, coresponding to mesh apertures of 0.105, 0.074, and 0.044 mm, respectively) silica flour and acts as an inert filler which keeps the resin composition from becoming brittle. It also acts as a heat absorbent during the reaction between the base resin mixture and the base hardener mixture. The colouring agent serves to identify the base resin mixture in order to distinguish it from other materials during its application by the end user.

The colloid used in preparing the base hardener mixture serves as a thickener, extender or suspension agent. A suitable material is very fine $SiO_2$ powder. A preferred colloid is available commercially under the name Cab-o-Sil (registered trade mark) (Cabot Inc., Boston Massachusetts, USA) and consists of fine white $SiO_2$ powder having a density of 2.1 g/cm$^3$ and a particle size of 0.015 to 0.020 $\mu$m. The colloid increases the viscosity of the base hardener mixture and prevents the silica flour from settling out during the reaction period.

The above end product, which is designated Epoximide E—12, is a flexible epoxy resin composition suitable for the repair of spalling, cracking, pitting and other damage to concrete and asphalt. It can be used to join concrete to asphalt and to resurface concrete floors, tanks and water reservoirs. Wood and metal surfaces may also be coated with this composition.

Another preferred epoxy composition of the present invention is produced by

(a) mixing the base resin with synthetic rubber, silica flour and a colouring agent in a proportion of approx. 50%:34%:14.5%:1.5% by weight, respectively, to form a base resin mixture,

(b) mixing the base hardener with synthetic rubber and silica flour in a proportion of approx. 54%:31%:15% by weight, respectively, to form a base hardener mixture, and

(c) mixing the base resin mixture with the base hardener mixture in a proportion of approx. 50%:50% by weight.

The synthetic rubber, as used above, consists preferably of equal parts by weight of polybutadiene, oil extended butadiene-styrene copolymer, polychloroprene, polyisobutyrene and polysulphide rubber, whilst the silica flour is preferably the same as that used in preparing the epoxy composition E—12. Whilst the silica flour again acts as an inert filler, the synthetic rubber additives participate in the reactions between the base resin mixture and the base hardener mixture and undergo chemical change during the process. The colouring agent is again employed in order to distinguish the material during use in the field. The epoxy resin composition produced in the above-described manner is designated LA—15.

This epoxy resin composition is suitable for use as a heavy-duty paving material and has been formulated specifically for use as a cable-barrier inlay or cable-arrester inlay as fitted to the deck of an aircraft carrier. The material is inlayed to a minimum depth of 5 cm covering the impact area. It bonds extremely well to cut-away concrete and metal surfaces, is chemically

resistant to jet fuels, liquid oxygen, grease, acids and cleaning solvents, and is an unusually tough and resilient material.

Another preferred epoxy resin composition of the present invention is produced by

(a) mixing the base resin with synthetic rubber in a proportion of approx. 60%:40% by weight, respectively, to form a base resin mixture,

(b) mixing the base hardener with synthetic rubber in a proportion of approx. 55%:45% by weight, respectively, to form a base hardener mixture, and

(c) mixing the base resin mixture with the base hardener mixture in a proportion of approx. 50%:50% by weight.

The synthetic rubber additives are the same as those previously described and they function in the same way in both cases. The base epoxy resin composition produced as described above is designated LA—40.

The epoxy resin composition LA—40 is a modification of the base epoxy resin composition, adapted for use as a filler in concrete or asphalt joints, where flexibility and adhesion are of primary importance. This composition, with its high content of synthetic rubber materials is highly flexible and also resistant to jet fuel, liquid oxygen, grease, acid and cleaning solvents, so that it may be utilized in a wide variety of structures.

A further preferred epoxy resin composition of the present invention is produced by

(a) mixing the base resin with silica flour and a colouring agent in a proportion of approx. 27%:69%:4% by weight, respectively, to form a base resin mixture, and

(b) mixing this base resin mixture with the base hardener in a proportion of approx. 50%:50% by weight.

The base hardener employed in forming this composition is the same base hardener which is used in forming the basic epoxy resin composition E—12. The silica flour is preferably the same as that described above. This particular epoxy resin composition is designated LA—5.

The epoxy resin composition LA—5 is a flexible, highly adherent and durable material, which is ideally suited for use as a paint for distinguishing traffic lanes on highways or work and safety zones on factory floors, or similar applications. The colouring agent may be selected as appropriate for the particular application.

The invention will be further illustrated in detail with reference to the drawing, in which

Figure 1 is a block diagram showing the formulation and combination of the basic constituents in forming the base epoxy resin composition of the invention;

Figure 2 is a similar block diagram showing the formulation of a modified epoxy resin composition of the invention for use in the repair or resurfacing of concrete and asphalt;

Figure 3 is a similar block diagram showing the formulation of another modification of the epoxy resin composition of the invention for use as a heavy duty paving material;

Figure 4 is a similar block diagram illustrating the formulation of another modification of the epoxy resin composition of the present invention for use as a joint filler between sections of asphalt or concrete; and

Figure 5 is a similar block diagram showing the formulation of a further modification of the epoxy resin composition of the invention for use as a durable paint for highways, floors, paths, etc.

In Figure 1 a base resin 11 is formed from 10% of an ester of 13, 79% of a first resin 14, 6% of a first resin 14, 6% of a plasticizer 15 and 5% of a second resin 16, and a base hardener 12 is formed from 80% of a coreactant 17, 5% of a phenol 18 and 15% of pine oil 19, the individual constituents being as previously defined and the percentages being by weight. The base resin 11 and the base hardener 12 are stored separately until the final composition is required for application, when they are mixed together in suitable proportions, the curing being more rapid with higher proportions of the hardener. As shown in Figure 1, equal parts by weight of the base resin 11 and the base hardener 12 are mixed together to give a curable base epoxy resin composition 10.

In Figure 2 a base resin mixture E—12A is formed from 27% of the base resin 11, 72% of silica flour 21 and 1% of a colouring agent 22, and a base hardener E—12B is formed from 20% of the base hardener 12, 2% of a colloid 23 and 78% of silica flour 24, the individual constituents being as previously defined and the percentages being by weight. The base resin mixture E12A and the base hardener mixture E—12B are again stored separately until the final composition is required, when equal parts of each are mixed together to give the curable epoxy resin composition E—12.

In Figure 3 a base resin mixture LA—15A is formed from 50% of the base resin 11, 34% of synthetic rubber 25, 14.5% of silica flour 26 and 1.5% of a colouring agent 27, and a base hardener mixture LA—15A is formed from 54% of the base hardener 12, 31% of synthetic rubber 28 and 15% of silica flour 29, the individual constituents being as previously defined and the percentages being by weight. The base resin mixture LA—15A and the base hardener mixture LA—15B are again stored separately until the final composition is required for application, when equal parts of each are mixed together to give the curable epoxy resin composition LA—15.

In Figure 4 a base resin mixture LA—40A is formed from 60% of the base resin 11 and 40% of synthetic rubber 31, and a base hardener mixture LA—40B is formed from 55% of the base hardener 12 and 45% of synthetic rubber 32, the individual constituents being as previously defined and the percentages being by weight. The base resin mixture LA—40A and the base hardener mixture LA—40B are again stored separately until the final composition is required for application, when equal parts of each are mixed together to give the curable epoxy resin composition LA—40.

In Figure 5 a base resin mixture LA—5A is formed from 27% (wt.) of the base resin 11, 69% of silica flour 33 and 4% of a colouring agent 34. When the final composition is required, a mixture is prepared of equal parts by weight of the base resin mixture LA—5A and a base hardener LA—5B, this base hardener being identical with the base hardener 12 as prepared in Figure 1, to give the curable epoxy resin composition LA—5. The silica flour is as defined previously.

ALl of the final epoxy resin compositions described, including the base epoxy resin composition 10 and the epoxy resin compositions E—12, LA—15, LA—40 and LA—5 as well as other modified forms of the base constituents not described are of high durable stability, mechanical strength and resilience and exhibit low shrinkage and resistance to reaction of chemicals. The component materials are non-toxic, non-irritating, non-combustible and they contain no volatile solvents. They may be applied at virtually any temperature, although the rate of curing is very slow below freezing point. A layer of the curable epoxy resin composition of the present invention of 5 cm thickness will cure in about 8 hours at 10°C and in about 6 hours at 21°C. Curing is accelerated at higher temperatures, for example, 60°C. If a solid resin is used as the second resin, consideration should be given to the melting point of the solid resin. For example, if the solid resin selected is that available under the name EPON (registered trade mark) 1001 or EPIKOTE (registered trade mark) 1001, then curing should be made above 70°C. Equipment used may be cleaned with soap and water or with steam.

Thus a highly versatile and improved group of epoxy resin compositions is provided, in accordance with the stated object of the invention.

## Claims

1. An amidoamine adduct hardened epoxy resin composition based on epichlorohydrin/bisphenol A, characterised in that said composition is produced by the process of

(a) mixing together by weight approx. 10% of a glycidyl ester of a saturated carbon-chain substituted tertiary carboxylic acid, having an epoxide equivalent weight of 240 to 250, approx. 79% of a first resin which is an epichlorohydrin/bisphenol A liquid resin having an epoxide equivalent weight in the range 182 to 194, approx. 6% of a plasticizer which is a mixture of the monoglycidyl ether derivatives of the $C_{15}$-alkyl phenols obtained from cashew nut liquid, having an epoxide equivalent weight of about 490, and approx. 5% of a second resin which is an epichlorohydrin/bisphenol A liquid or solid resin having an epoxide equivalent weight of 390 to 500 to form a base resin.

(b) mixing together by weight approx. 80% of a co-reactant which is an amidoamine resin having an amine value of about 450 and a viscosity of 0.5 to 1.0 Pas/25°C, approx. 5% of a tri-(di-methylaminomethyl) phenol, and approx. 15% of pine oil to form a base hardener, and

(c) mixing together said base resin and said base hardener and allowing the mixture to cure.

2. An epoxy resin composition according to claim 1, produced by mixing together said base resin and said base hardener in equal proportions by weight.

3. An epoxy resin composition according to claim 1, produced by

(a) mixing said base resin with silica flour and a colouring agent in a proportion of 27%:72%:1% by weight, respectively, to form a base resin mixture,

(b) mixing said base hardener with silica flour and a colloid in a proportion of 20%:78%:2% by weight, respectively, to form a base hardener mixture, and

(c) mixing said base resin mixture with said base hardener mixture in a proportion of 50%:50% by weight.

4. An epoxy resin composition according to claim 1, produced by

(a) mixing said base resin with synthetic rubber, silica flour and a colouring agent in a proportion of 50%:34%:14.5%:1.5% by weight, respectively, to form a base resin mixture,

(b) mixing said base hardener with synthetic rubber and silica flour in a proportion of 54%:31%:15% by weight, respectively, to form a base hardener mixture, and

(c) mixing said base resin mixture with said base hardener mixture in a proportion of 50%:50% by weight.

5. An epoxy resin composition according to claim 1, produced by

(a) mixing said base resin with synthetic rubber in a proportion of 60%:40% by weight, respectively, to form a base resin mixture,

(b) mixing said base hardener with synthetic rubber in a proportion of 55%:45% by weight, respectively, to form a base hardener mixture, and

(c) mixing said base resin mixture with said base hardener mixture in a proportion of 50%:50% by weight.

6. An epoxy resin composition according to claim 1, produced by

(a) mixing said base resin with silica flour and a colouring agent in a proportion of 27%:69%:4% by weight, respectively, to form a base resin mixture, and

(b) mixing said base resin mixture with said base hardener in a proportion of 50%:50% by weight.

7. Use of the epoxy resin composition according to claim 3 for repairing and resurfacing concrete or asphalt.

8. Use of the epoxy resin composition according to claim 4 as a heavy-duty paving material.

9. Use of the epoxy resin composition according to claim 5 as a joint filler between sections of asphalt or concrete.

10. Use of the epoxy resin composition according to claim 6 as a durable paint for motorways, highways, floors, pathways and similar surfaces.

**Revendications**

1. Composition de résine époxy, durcue par un produit d'addition amidoamine, à base d'épichlorhydrine/bisphénol A, caractérisée en ce qu'elle est obtenue par le procédé consistant à:

a) mélanger environ 10% en poids d'un ester glycidique (13) d'un acide carboxylique tertiaire à chaîne carbonée saturée substituée, présentant un poids équivalent époxyde de 240 à 250, environ 79% en poids d'une première résine (14) qui est une résine liquide à base d'épichlorohydrine/bisphénol A présentant un poids équivalent époxyde compris entre 182 et 194, environ 6% en poids d'un plastifiant (15) qui est un mélange des dérivés éthers monoglycidiques des phénols alcoylés en $C_{15}$ obtenus à partir du liquide de la noix de cajou, présentant un poids équivalent époxyde d'environ 490, et environ 5% en poids d'une seconde résine (16) qui est une résine liquide ou solide à base d'épichlorohydrine/bisphénol A, présentant un poids équivalent époxyde de 390 à 500, afin d'obtenir une résine de base (11);

b) mélanger environ 80% en poids d'un réactif complémentaire (17) qui est une résine amidoamine présentant une valeur d'amine d'environ 450 et une viscosité de 0,5 à 1,0 pas/25°C, environ 5% en poids d'un tri(diméthylaminométhyl) phénol (18) et environ 15% en poids d'huile de pin afin d'obtenir un durcisseur de base (12); et

c) mélanger la résine de base et le durcisseur de base et permettre au mélange de subir une réticulation.

2. Composition de résine époxy suivant la revendication 1, caractérisée en ce qu'elle est obtenue en mélangeant la résine de base et le durcisseur de base dans des proportions égales en poids.

3. Composition de résine époxy suivant la revendication 1 caractérisée en ce qu'elle est obtenue en procédant comme suit:

a) mélanger la résine de base (11) avec de la silice en poudre (21) et en colorant (22) respectivement dans des proportions de 27:72:1% en poids de façon à obtenir un mélange de résine de base;

b) mélanger le durcisseur de base (12) avec de la silice en poudre (24) et en colloïde (23) respectivement dans des proportions de 20:78:2% en poids de façon à obtenir un mèlange de durcisseur de base; et

c) mélanger le mélange de résine de base avec le mélange de durcisseur de base dans un rapport de 50:50% en poids.

4. Composition de résine époxy suivant la revendication 1, caractérisée en ce qu'elle est obtenue en procédant comme suit:

a) mélanger la résine de base (11) avec du caoutchouc synthétique (25), de la silice en poudre (26) et un colorant (27) respectivement dans un rapport de 50:34:14,5 et 1,5% en poids de façon à former un mélange de résine de base;

b) mélanger le durcisseur de base (12) avec du caoutchouc synthétique (28) et de la silice en poudre (29) respectivement dans un rapport de 54:31:15% en poids de façon à former un mélange de durcisseur de base; et

c) mélanger le mélange de résine de base et le mélange de durcisseur de base dans un rapport de 50:50% en poids.

5. Composition de résine époxy suivant la revendication 1, caractérisée en ce qu'elle est obtenue en procédant comme suit:

a) mélanger la résine de base (11) avec du caoutchouc synthétique (31) respectivement dans un rapport de 60:40% en poids de façon à former un mélange de résine de base;

b) mélanger le durcisseur de base (12) avec du caoutchouc synthétique (32) respectivement dans un rapport de 55:45% en poids de façon à former un mélange de durcisseur de base; et

c) mélanger le mélange de résine de base avec le mélange de durcisseur de base dans un rapport de 50:50% en poids.

6. Composition de résine époxy suivant la revendication 1, caractérisée en ce qu'elle est obtenue en procédant comme suit:

a) mélanger la résine de base (11) avec de la silice en poudre (33) et un colorant (34) respectivement dans un rapport de 27:69:4% en poids de façon à former un mélange de résine de base; et

b) mélanger le mélange de résine de base avec le durcisseur de base dans un rapport de 50:50% en poids.

7. Utilisation de la composition de résine époxy suivant la revendication 3 pour réparer et refaire le revêtement d'ouvrages en béton ou en asphalte.

8. Utilisation de la composition de résine époxy suivant la revendication 4 en tant que matière de revêtement résistant à des conditions de service sévères.

9. Utilisation de la composition de résine époxy suivant la revendication 5 en tant que remplissage de joints entre des parties en asphalte ou en béton.

10. Utilisation de la composition de résine époxy suivant la revendication 6 en tant que peinture durable pour autoroutes, grandes routes, sols, chemins et surfaces analogues.

**Patentansprüche**

1. Aminoamidadduktgehärtete Epoxidharzzusammensetzung auf Basis von Epichlorhydrin/Bisphenol A, dadurch gekennzeichnet, daß die Zusammensetzung durch ein Verfahren hergestellt wird, bei dem man

a) gewichtsbezogen ungefähr 10% eines Glycidylesters einer gesättigten, kohlenstoffkettensubstituierten, tertiären Carbonsäure mit einem Epoxid-Äquivalentgewicht von 240 bis 250, ungefähr 79% eines ersten Hartes, das ein flüssiges Epichlorhydrin/Bisphenol A — Harz mit einem Epoxid-Äquivalentgewicht im Bereich 182 bis 194 ist, ungefähr 6% eines Weichmachers, der eine Mischung der Monoglycidylätherderivate der aus dem Kaschunuß Schalenöl erhaltenen $C_{15}$-Alkylphenole mit einem Epoxid-Äquivalentgewicht von ungefähr 490 ist, und ungefähr 5% eines zweiten Harzes, das ein flüssiges oder festes Epichlorhydrin/Bisphenol A — Harz mit einem Epoxid-Äquivalentgewicht von 390 bis 500 ist, zur Bildung eines Grundharzes zusammenmischt.

b) gewichtsbezogen ungefähr 80% eines Reaktionspartners, der ein Aminoamidharz mit einer Aminzahl von ungefähr 450 und einer Viskosität von 0,5 bis 1,0 Pa s/25°C ist, ungefähr 5% eines Tri-(dimethylaminomethyl)-phenols und ungefähr 15% Kiefernöl zur Bildung eines Grundhärters zusammenmischt und

c) das Grundharz und den Grundhärter miteinander vermischt und aushärten läßt.

2. Epoxidharzzusammensetzung nach Anspruch 1, hergestellt durch Zusammenmischen des Grundharzes und des Grundhärters zu gleichen Gewichtsanteilen.

3. Epoxidharzzusammensetzung nach Anspruch 1, hergestellt durch

a) Vermischen des Grundharzes mit Quarzmehl und einem Farbstoff im Gewichtsverhältnis von 27%:72%:1% zur Bildung einer Grundharzmischung,

b) Vermischen des Grundhärters mit Quarzmehl und einem Kolloid im Gewichtsverhältnis von 20%:78%:2% zur Bildung einer Grundhärtermischung und

c) Vermischen der Grundharzmischung mit der Grundhärtermischung im Gewichtsverhältnis von 50%:50%.

4. Epoxidharzzusammensetzung nach Anspruch 1, hergestellt durch

a) Vermischen des Grundharzes mit Kunstgummi, Quarzmehl und einem Farbstoff im Gewichtsverhältnis von 50%:34%:14,5%:1,5% zur Bildung einer Grundharzmischung,

b) Vermischen des Grundhärters mit Kunstgummie und Quarzmehl im Gewichtsverhältnis von 54%:31%:15% zur Bildung einer Grundhärtermischung und

c) Vermischen der Grundharzmischung mit der Grundhärtermischung im Gewitchtsverhältnis von 50%:50%.

5. Epoxidharzzusammensetzung nach Anspruch 1, hergestellt durch

a) Vermischen des Grundharzes mit Kunstgummi im Gewichtsverhältnis von 60%:40% zur Bildung einer Grundharzmischung,

b) Vermischen des Grundhärters mit Kunstgummi im Gewichtsverhältnis 55%:45% zur Bildung einer Grundhärtermischung und

c) Vermischen der Grundharzmischung mit der Grundhärtermischung im Gewichtsverhältnis von 50%:50%.

6. Epoxidharzzusammensetzung nach Anspruch 1, hergestellt durch

a) Vermischen des Grundharzes mit Quarzmehl und einem Farbstoff im Gewichtsverhältnis von 27%:69%:4% zur Bildung einer Grundharzmischung und

b) Vermischen der Grundharzmischung mit dem Grundhärter im Gewichtsverhältnis von 50%:50%.

7. Verwendung der Epoxidharzzusammensetzung nach Anspruch 3 zur Instandsetzung und Wiederbeschichtung von Beton oder Asphalt.

8. Verwendung der Epoxidharzzusammensetzung nach Anspruch 4 als Pflasterungsmaterial.

9. Verwendung der Epoxidharzzusammensetzung nach Anspruch 5 als Material zum Füllen der Fugen zwischen Asphalt oder Betonabschnitten.

10. Verwendung der Epoxidharzzusammensetzung nach Anspruch 6 als dauerhaften Farbanstrich für Autobahnen, Landstraßen, Fußböden, Gewege, und ähnliche Oberflächen.

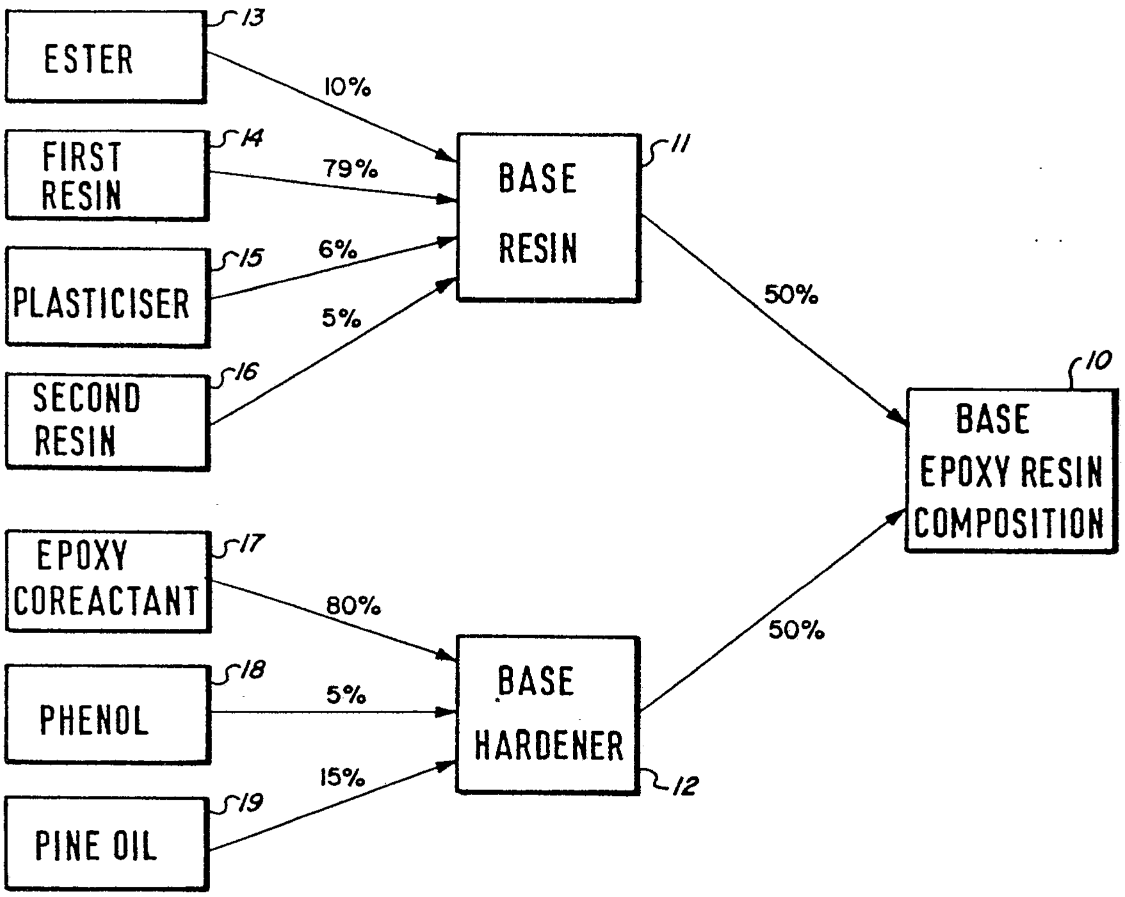
ESTER
13
10%
FIRST RESIN
14
79%
BASE RESIN
11
PLASTICISER
15
6%
5%
SECOND RESIN
16
50%
BASE EPOXY RESIN COMPOSITION
10
EPOXY COREACTANT
17
80%
50%
BASE HARDENER
12
PHENOL
18
5%
PINE OIL
19
15%

FIG. 1

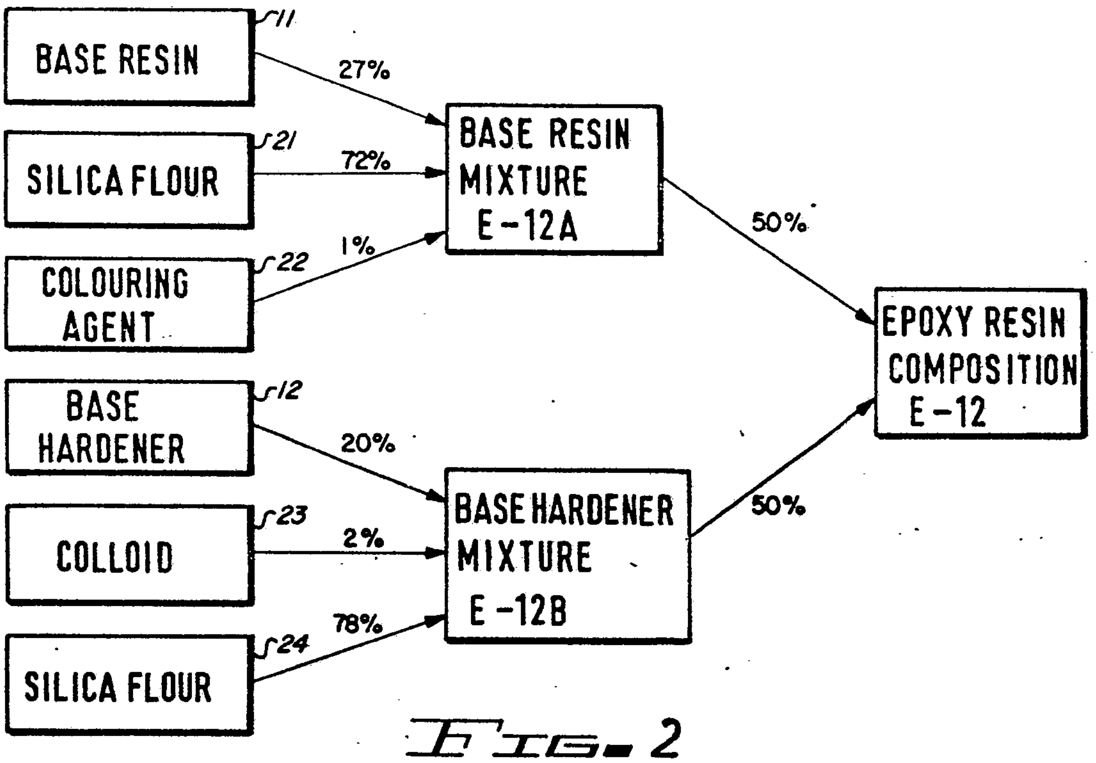

BASE RESIN
11
27%
SILICA FLOUR
21
72%
COLOURING AGENT
22
1%
BASE RESIN MIXTURE E-12A
50%
EPOXY RESIN COMPOSITION E-12
BASE HARDENER
12
20%
COLLOID
23
2%
SILICA FLOUR
24
78%
BASE HARDENER MIXTURE E-12B
50%


FIG. 2

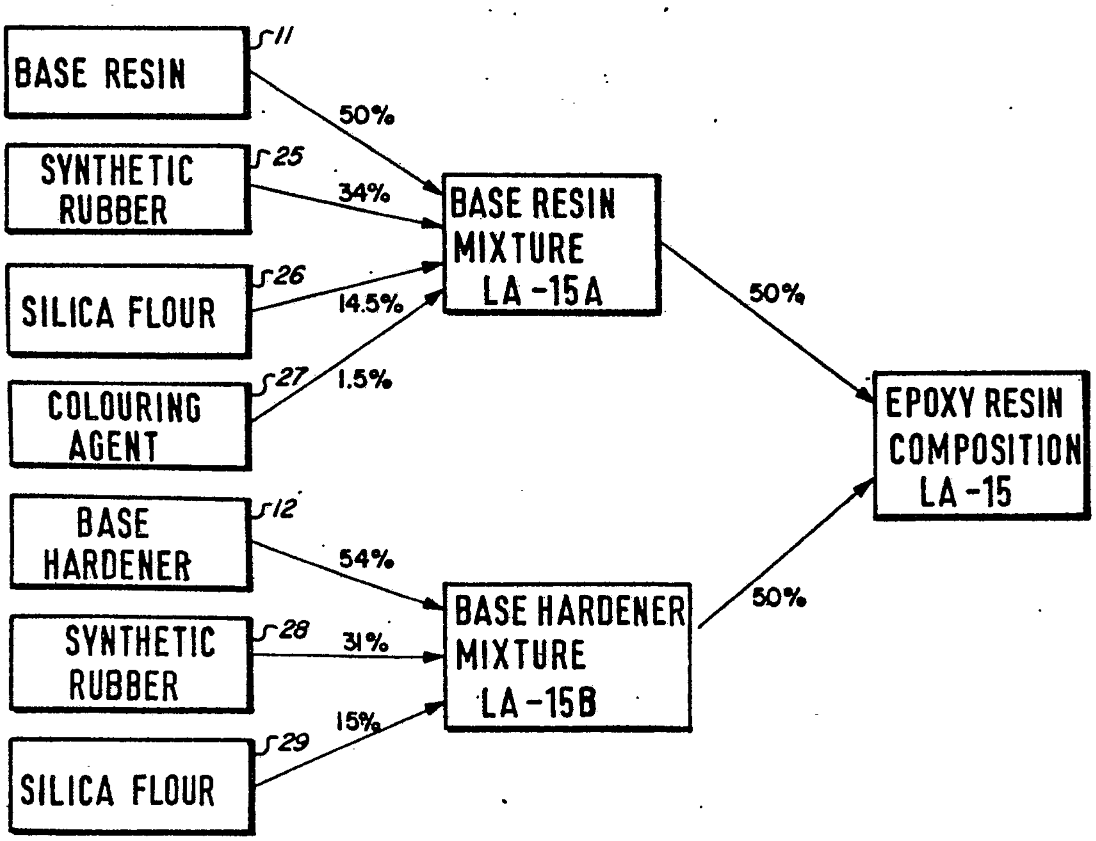

BASE RESIN
11
50%
SYNTHETIC RUBBER
25
34%
SILICA FLOUR
26
14.5%
COLOURING AGENT
27
1.5%
BASE RESIN MIXTURE LA-15A
50%
EPOXY RESIN COMPOSITION LA-15
BASE HARDENER
12
54%
SYNTHETIC RUBBER
28
31%
SILICA FLOUR
29
15%
BASE HARDENER MIXTURE LA-15B
50%


FIG. 3

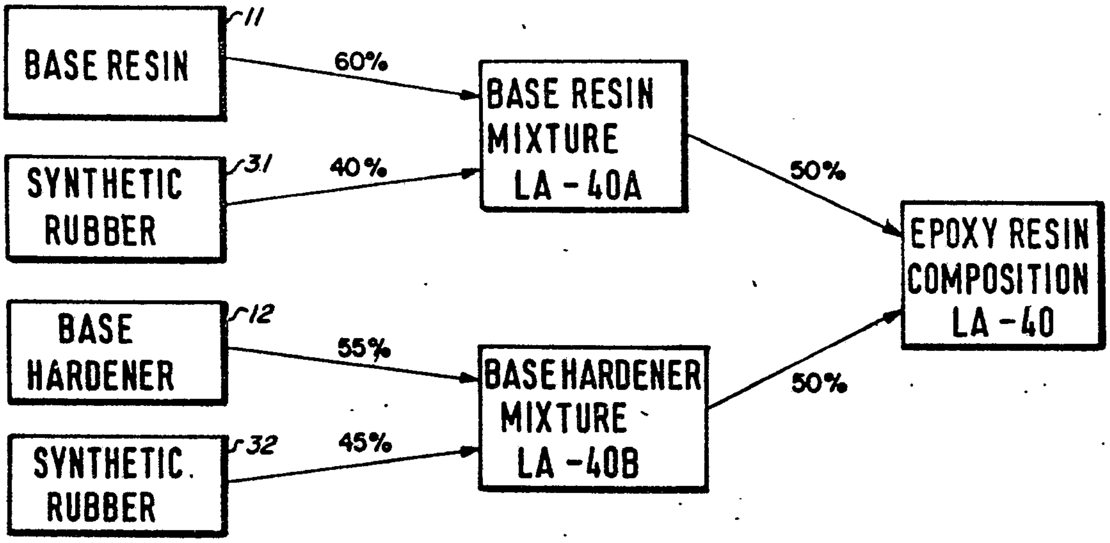
BASE RESIN
11
60%
SYNTHETIC RUBBER
31
40%
BASE RESIN MIXTURE LA-40A
50%
EPOXY RESIN COMPOSITION LA-40
BASE HARDENER
12
55%
SYNTHETIC RUBBER
32
45%
BASE HARDENER MIXTURE LA-40B
50%

FIG. 4

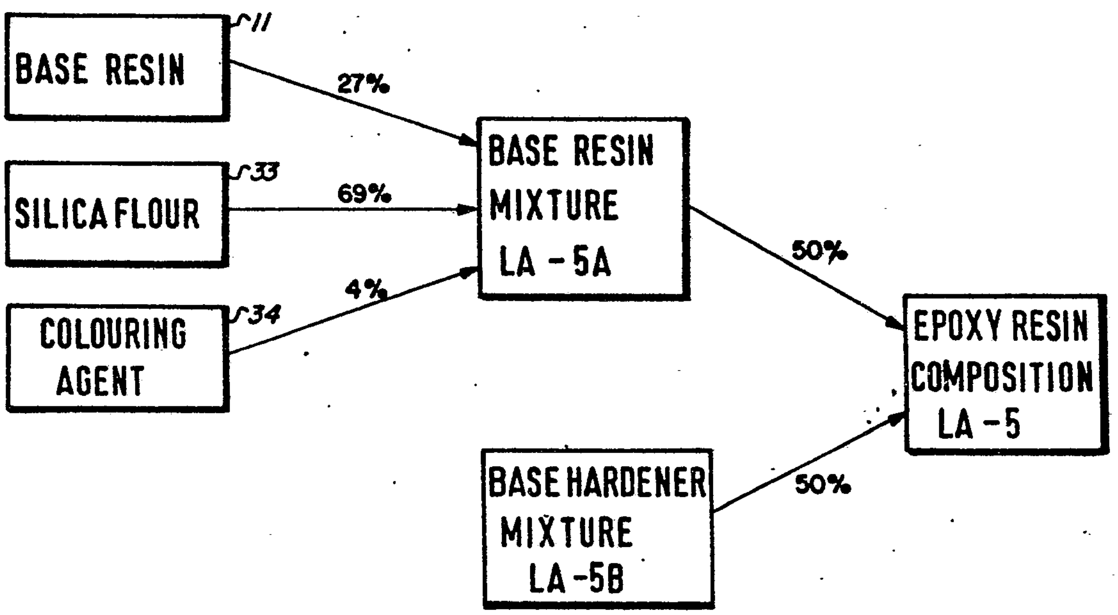
BASE RESIN
11
27%
SILICA FLOUR
33
69%
COLOURING AGENT
34
4%
BASE RESIN MIXTURE LA-5A
50%
EPOXY RESIN COMPOSITION LA-5
BASE HARDENER MIXTURE LA-5B
50%

FIG. 5